# EUROPÄISCHE PATENTSCHRIFT

(11) **EP 2 299 831 B1**
(45) Veröffentlichungstag und Bekanntmachung des Hinweises auf die Patenterteilung: **03.10.2012**
(21) Anmeldenummer: 09804229.4
(22) Anmeldetag: 18.11.2009
(51) Int. Cl.: A21C 3/08

(54) **VERFAHREN UND VORRICHTUNG ZUM LEGEN VON BREZELN**
METHOD AND DEVICE FOR FORMING PRETZELS
PROCÉDÉ ET DISPOSITIF POUR FORMER DES BRETZELS

(30) Priorität: 11.12.2008 DE 102008061804
(43) Veröffentlichungstag der Anmeldung: 30.03.2011
(73) Patentinhaber: AROTEC Automation und Robotik GmbH, 86156 Augsburg (DE)
(72) Erfinder: COTTONE, Norbert, 86441 Zusmarshausen (DE)
(74) Vertreter: Lempert, Jost
(86) Internationale Anmeldenummer: PCT/DE2009/001638
(87) Internationale Veröffentlichungsnummer: WO 2010/066227

(56) Entgegenhaltungen:
- DE-A1- 4 314 170
- DE-A1-102006 026 558
- DE-A1-102006 044 817
- DE-U1- 29 918 111
- US-A- 6 036 990

## Beschreibung

Die Erfindung betrifft ein Verfahren und eine Vorrichtung zum Legen von Brezeln. Der Begriff Brezel wird hier für einen in Brezelform gelegten Teigstrang vor dem Gären und Ausbacken zur fertigen "Brezel" verwendet.

Im Bäckerhandwerk, vor allem in Großbäckereien, ist der Trend zur Automatisierung zunehmend feststellbar. Insbesondere wird vielerorts versucht, die Arbeitsschritte bis zum ofenfertigen Produkt zu automatisieren. Für die Erstellung von Brezeln, bei denen die Enden des Teigstrangs verschlungen werden müssen, gibt es nach dem Stand der Technik viele Ideen, jedoch nur sehr wenige Maschinen am Markt, die eine zufriedenstellende Qualität, eine hohe Prozesssicherheit (Verfügbarkeit) und eine hohe Leistung bieten.

Bei der Herstellung der Brezeln wird i.A. ein vorportionierbarer, etwa kugelförmiger Teigling mit Hilfe eines Strangformers oder einer Ausrollmaschine in einem Teigstrang umgeformt. Am Ausgang des Strangformers stehen mehr oder weniger geradlinige, hörnchenförmige (bauchige) Teiglinge auf einem Transportband zur Verfügung. Bei der manuellen Herstellung der Brezeln gibt es zwei mögliche Verfahren: Bei ersten Verfahren nimmt der Werker den geradlinigen Teigstrang an seinen beiden Enden auf und verdrillt diese in einer Schlingbewegung um 360° und legt anschließend die Teigstrangenden auf das Mittelstück der Brezel. Im zweiten Verfahren schlingt der Werker den Teigstrang zunächst um 180°, so dass am Ende eine erste Schlaufe vorliegt. Die beiden Enden werden anschließend gekreuzt und in einem Abstand links und rechts der Teilingsmitte aufgedrückt und mit Hilfe der Finger zu ihrer finalen Brezelform ausgerichtet. Sehr häufig wird die Brezel dann erneut aufgenommen, gewendet (gespiegelt) und in ein Gärgehänge eingelegt.

Bereits heute sind erste Maschinen im Einsatz, mit denen dieser Herstellungsprozess maschinell bzw. automatisiert durchgeführt wird. Hierbei wird versucht, den manuell beschriebenen Herstellprozess auf verschiedene Arten nachzubilden. Beinahe alle bekannten Verfahren führen den vom Strangformer angelieferten geradlinigen Teigstrang mit Hilfe einer Formeinheit in eine U-Form über. Anschließend werden die beiden Teigenden mittels einer Aufnahme- bzw. Greifeinheit (Zangen- oder Backengreifer oder Vakuum) aufgenommen, um 360° gegeneinander verdreht und anschließend in einem festen Abstand zur Teigstrangmitte hin abgelegt.

Die DE 43 14 170 A1 zeigt eine Vorrichtung zum Schlingen von Brezeln in Form einer Sonderkinematik, die hierzu zwei gleiche U-förmig ausgebildete Arme aufweist, wobei die Schenkel jeden Armes unterschiedlich lang ausgebildet sind. An den freien Enden der kurzen Schenkel sind Drehachsen ausgebildet, die jeweils über ein Gestänge horizontal verschiebbar, dreh-, heb- und senkbar sind. Am freien Ende des längeren Schenkels findet sich ein Greif- oder Saugelement zur Aufnahme der Enden des zu einer Brezel zu schlingenden Teigstranges. Die beiden Schenkel jedes Armes sind an ihren der Drehachse bzw. dem Greifelement abgewandten Ende starr miteinander verbunden.

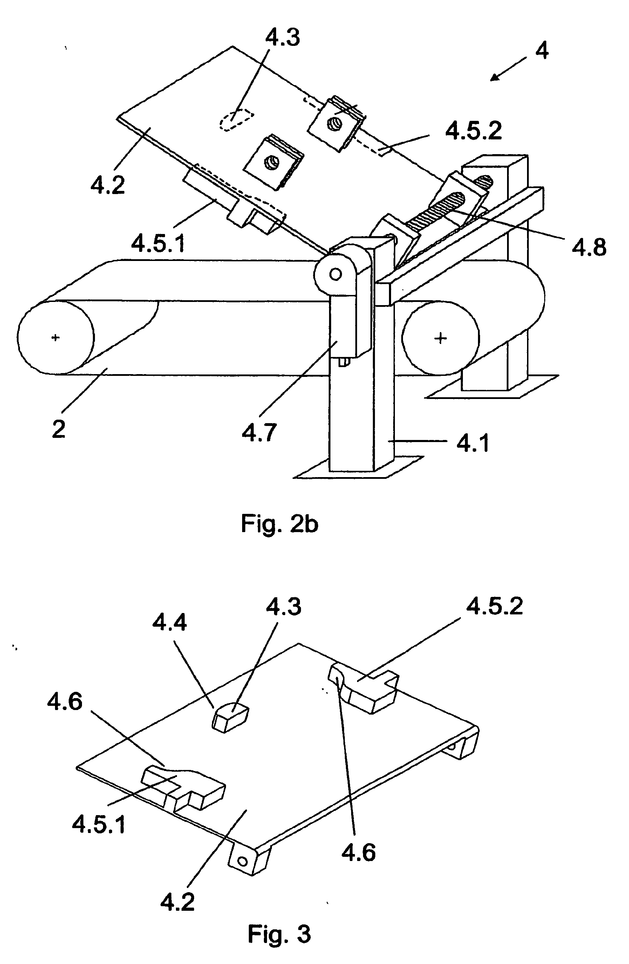

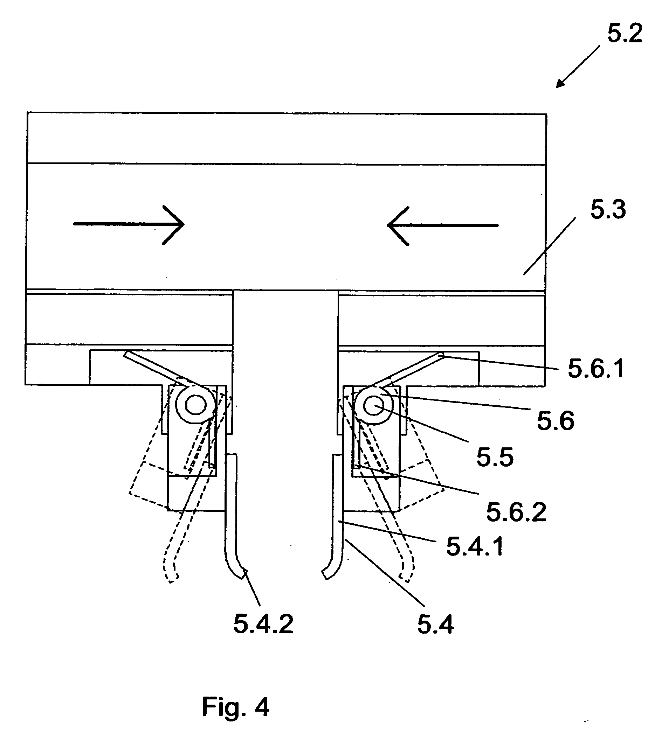

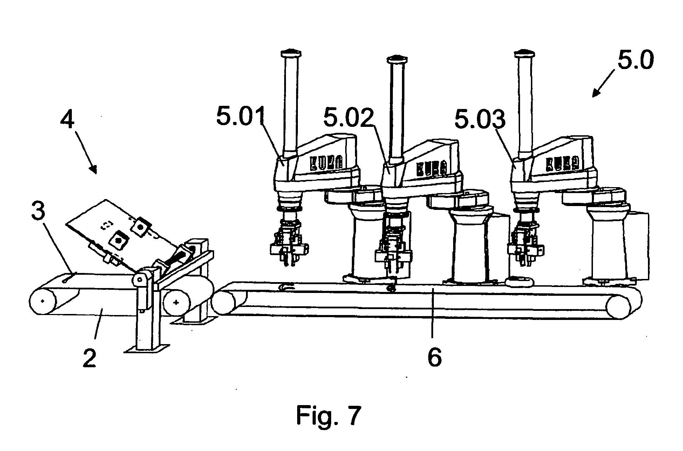

Zum Schlingen einer Brezel greifen die beiden Greifelemente an den freien Armen, wie dies unter Bezug auf die Zeichnung dargestellt ist, gleichzeitig die Enden des Stranges und führen diese unter Aufeinanderzubewegung ihrer Drehpunkte zu einem asymmetrischen Gebilde (Fig. 3), dessen Außenkontur dem einer geöffneten Sicherheitsnadel ähnelt durch gleichzeitiges weiteres Verfahren der Drehachsen der Arme in entgegengesetzter Richtung voneinander weg und werden die Enden der Brezel übereinander geführt (Fig. 4). Im Folgenden wird sodann das nun linke Ende des Stranges etwa über die Mitte des sich im Wesentlichen parallel zum liegengebliebenen mittleren Bereich des Stranges erstreckende rechte Ende gelegt, woraufhin letzteres dem so geschaffenen Umlenkpunkt des nahen Stranges wiederum über diesen gelegt wird. Hierdurch entsteht eine Brezel, wie sie in Fig. 7 dargestellt ist, die offensichtlich keine übliche Brezelform hat, da kein senkrecht zum mittleren Bereich des Stranges verlaufender Steg gebildet wurde, sondern die Überlagerung der Strangenden bzw. die Schlingung nahe deren Kreuzungspunkt in der Ausgangslage der Fig. 4 geschieht. Auch bleibt der mittlere Bereich des Stranges bei den gebildeten Brezeln gestreckt und damit ebenfalls in einer untypischen Form, wobei weiterhin die Endspitzen des Stranges nicht auf dem mittleren Bereich, sondern an Seitenschenkeln aufliegen.

Der Erfindung liegt die Aufgabe zugrunde, ein vereinfachtes Verfahren zum Legen von Brezeln zu schaffen, das insbesondere mit Vorrichtungen aus Standardkomponenten ausgeführt werden kann, so dass eine erfindungsgemäße Vorrichtung aus derartigen Standardkomponenten bestehen kann.

Erfindungsgemäß wird die gesamte Aufgabe durch ein Verfahren mit den Merkmalen des Anspruchs 1 und durch eine Vorrichtung mit den Merkmalen des Anspruchs 7 gelöst.

Erfindungsgemäß wird jeweils lediglich ein Ende oder U-Schenkel des Teigstranges aufgenommen und verlegt, nicht aber beide gleichzeitig. Hierdurch wird das erfindungsgemäße Verfahren gegenüber dem Stand der Technik wesentlich vereinfacht und kann damit auch mittels Vorrichtungen aus Standardkomponenten durchgeführt werden. Das erfindungsgemäße Verfahren bietet mehr Möglichkeiten bzw. eine höhere Flexibilität, um auf Längen- und/oder Positionstoleranzen der Teigstränge zu reagieren.

Während grundsätzlich ein Gelenkroboter mit der üblichen Achsenzahl von sechs eingesetzt werden könnte, hat sich herausgestellt, dass vier Achsen ausreichen, so dass die Vorrichtung in bevorzugter Ausgestaltung dadurch gekennzeichnet ist, dass der Industrieroboter ein Roboter mit mindestens vier Achsen ist, wobei insbesondere der Industrieroboter horizontal- oder SCARA-Kinematik aufweist.

Die Erfindung hat damit den Vorteil, dass die Vorrichtung zum Legen von Brezeln auch insgesamt im Rahmen weiterer mit dem vorstehend beschriebenen Gegenstand als bevorzugter Ausgestaltung und Weiterbildung zusammenwirkender Komponenten durch wenige Standardkomponenten gebildet sein kann, die eine hohe Verfügbarkeit und damit einen im Vergleich zur Sondermaschine niedrigen Preis aufweisen. Darüber hinaus lässt sich das erfindungsgemäße Verfahren in einfacher Weise skalieren, d.h. an unterschiedliche Brezelgrößen, aber auch an unterschiedliche Brezelformen anpassen und demgemäß auch die erfindungsgemäße Vorrichtung zum Legen von Brezeln, indem lediglich eine Umprogrammierung der Bewegungsbahn des Roboters vorgenommen wird. Hierdurch bildet die erfindungsgemäße Vorrichtung ein flexibles Herstellungssystem, welches in der Lage ist, ohne Benutzereingriff verschiedene Brezelformen und/oder Brezelgrößen herzustellen.

Grundsätzlich besteht die Möglichkeit mit der erfindungsgemäßen Vorrichtung ohne jegliche Umrüstung eine hohe Flexibilität gegenüber Positions-/Längentoleranzen auszugleichen. Sollte der Teigstrang aber zu hohe Positionstoleranzen aufweisen, so ist eine Formstation mit einer verfahrbaren Formplatte auszubilden. Ein Laserscanner ist nur dann erforderlich und kann dann eingesetzt werden, wenn größere Positions- und Längentoleranzen auftreten können oder aber eine hohe Güte erzielt werden soll. Idealerweise ist er mit der vorgenannten modifizierten Formstation im Einsatz zu bringen.

Die Erfindung bietet darüber hinaus den Vorteil, dass Längen- und Positionstoleranzen der gradlinigen Teiglinge bei gleichbleibender Güte der Brezelform in größerem Maße als beim Stande der Technik ausgeglichen werden können, beispielsweise bis zu ± 10 bis 15mm. Trotz solch relativ großer Toleranzen gegenüber dem Stande der Technik wird der Herstellungsablauf im Rahmen des erfindungsgemäßen Verfahrens dennoch zuverlässig durchgeführt. Darüber hinaus schafft die Erfindung auch die Voraussetzung für eine hohe Flexibilität hinsichtlich der angestrebten Leistung, so dass eine Leistungsskalierung für kleine, mittlere und hohe Mengen möglich ist. So ist es grundsätzlich möglich, dass sämtliche Legeschritte von einem Roboter ausgeführt werden. Alternativ ist es möglich, dass jeder Roboter nur einen Legeschritt aufführt und demgemäß mehrere - bei den o.g. drei Legeschritten - drei Roboter hintereinander angeordnet sind. Auch können einzelne Roboter mehrere Legeschritte ausführen, deren Zahl aber unter der Gesamtzahl der auszuführenden Schritte liegt.

In bevorzugter Ausgestaltung ist vorgesehen, dass Länge und/oder Position des zugeführten Teigstranges bestimmt werden. Dabei verlaufen die Strangendbereiche nach U-Formung parallel zueinander und zur Symmetrieachse. Aufgrund dieser Messung können dann der Bewegungsweg des Roboters und die im Rahmen des erfindungsgemäßen Verfahrens auszuführenden einzelnen Legebewegungen jeweils angepasst werden. Weiterhin kann vorgesehen sein, dass der erste U-Schenkel im ersten Schritt im Wesentlichen parallel zur Tangente an die Mitte des U-Bogens des Teigstranges auf dem zweiten Schenkel abgelegt wird. Bevorzugt wird der Endbereich des zweiten U-Schenkels über etwa 235° verschwenkt und mit seinem Endbereich in einer Ausrichtung von etwa 45° zur Symmetrie-Mittel-Achse des U-Bogens ausgerichtet auf den U-Bogen abgelegt wird, wobei insbesondere der erste U-Schenkel symmetrisch zum vorher abgelegten zweiten U-Schenkel abgelegt wird. Die fertiggestellten Teig-Brezeln können auf einem Taktband gesammelt und die gesammelten Brezeln können nach Erreichen einer vorbestimmten Anzahl an ein Gärband übergeben werden.

Die Erfindung sieht in bevorzugter Ausgestaltung hierzu vor, dass der Teigstrang zum Verformen zunächst um ein den U-Bogen des in U-Form gelegten Teigstranges bildendes bogenförmiges Formelement herumgelegt wird, wobei insbesondere der Teigstrang mittels eines Förderers in Querausrichtung zur Förderrichtung gegen das Bogenelement bewegt und durch dieses in der Mitte des Teigstranges gehemmt wird, während die Enden des Teigstranges weitergeführt werden.

Insbesondere werden nach Bilden eines U-Bogens für den Teigstrang die U-Schenkel durch Formelemente mit S-förmigen Formwandungen zu einer Ω-Form des Teigstranges verformt, indem die freien Enden des Teigstranges gegenüber den am Übergangsbereichs des U-Schenkels anschließenden Bereichen der U-Schenkel näher gegeneinander bewegt werden.

Weitere Vorteile und Merkmale der Erfindung ergeben sich aus den Ansprüchen aus der nachfolgenden Beschreibung, in der Ausführungsbeispiel der Erfindung unter Bezugnahme auf die Zeichnung im Einzelnen erläutert sind. Dabei zeigt:

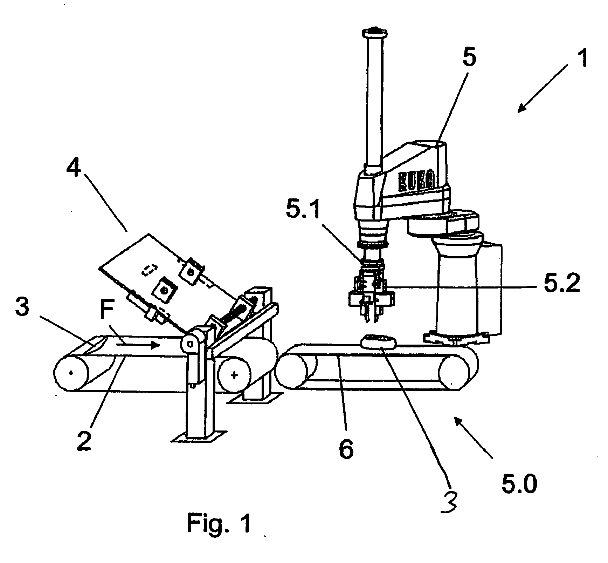

- Fig. 1: eine schematische Darstellung einer ersten Ausführungsform wesentlicher Teile der erfindungsgemäßen Vorrichtung;
- Fig. 2a: eine vergrößerte Darstellung der Formstation der Fig. 1;
- Fig. 2b: eine weitere Ausgestaltung der Formstation der Fig. 2a;
- Fig. 3: eine Draufsicht auf die Formelemente der Formstation der Fig. 2.
- Fig. 4: eine schematische Darstellung einer Greifereinheit der erfindungsgemäßen Vorrichtung in Seitenansicht;
- Fig. 5: eine Darstellung einer Greifereinheit der erfindungsgemäßen Vorrichtung perspektivischer Unteransicht;
- Fig. 6a-6h: die einzelnen Schritte des erfindungsgemäßen Verfahrens zum Legen einer Brezel,
- Fig. 7: eine alternative Ausführungsform der wesentlichen Elemente der erfindungsgemäßen Vorrichtung.

Die erfindungsgemäße Vorrichtung 1 weist zunächst ein erstes Förderband 2 auf, auf dem gestreckt liegenden strangförmigen Teiglinge 3 in Ausrichtung quer zur Förderrichtung F zugefördert werden. Die Teiglinge 3 können direkt auf den Anfang des Förderbandes 2 aufgelegt oder auf dieses von einem weiteren vor diesem angeordneten Förderband zugefördert werden.

Über dem Förderband 2 ist eine Formstation 4 angeordnet, die im Weiteren noch beschrieben wird. Der Formstation 4 ist eine Schlingstation 5.0 mit einem Roboter 5, hier ein SCARA-Roboter nachgeordnet. Das Förderband 2 kann bis zu dem Roboter 5 geführt sein. Im dargestellten Ausführungsbeispiel schließt sich an das Förderband 2 ein weiteres Förderband 6 im Arbeitsbereich des Roboters an.

Die Formstation 4 weist eine schwenkbare an Säulen 4.1 gelagerte Formaufnahmeplatte 4.2 auf. Statt verschwenkbar könnte die Formaufnahmeplatte 4.2 auch vertikal verfahrbar ausgebildet sein. Die Formaufnahmeplatte 4.2 trägt zum einen fest mittig ein bogenförmiges Formelement 4.3 mit einer entgegen der Förderrichtung des Förderbandes 2 gerichteten bogenförmigen Wandung 4.4 (Fig. 3). Weiterhin trägt die Formaufnahmeplatte 4.2 zwei seitliche Formelemente 4.5.1 und 4.5.2 gegeneinander gerichteten heftförmigen Wandungen 4.6. Die Formelemente 4.5.1 und 4.5.2 sind gegenüber einander verfahrbar wie im Folgenden noch beschrieben wird. Der innere Bogen (Wendepunkt) der Formelemente 4.5.1, 4.5.2 zeigt in Arbeitsposition derselben etwas außerhalb bzw. über der Mitte des bogenförmigen Formelementes 4.3. Der Wendepunkt definiert die Position der äußeren Wandung der Brezel.

Am Förderband 2 ist auf Höhe des bogenförmigen Formelementes 4.3 ist eine Lichtschranke (nicht dargestellt) zur Überwachung des Eintreffens der Teiglinge 3 an dem Formelement 4.3 angeordnet. Die Position der Lichtschranke ist so gewählt, dass der Lichtstrahl bei abgelassener Formaufnahmeplatte 4.2 vor dem Formelement 4.3 liegt.

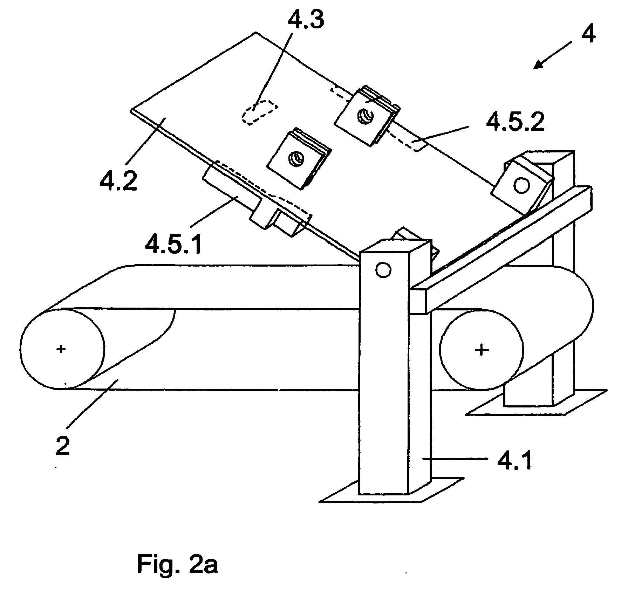

Grundsätzlich besteht die Möglichkeit, mit der Vorrichtung ohne jegliche Umrüstung eine hohe Flexibilität gegenüber Positions-/Längentoleranzen auszugleichen. Sollte der Teigstrang aber zu hohe Positionstoleranzen aufweisen, so ist die Formstation gemäß der Fig. 2b auszuprägen. Hier sind Motoren 4.7 mit 4.8 vorgesehen, mittels der die Formplatte 4.2 relativ zum Förderband 2 verfahren werden kann. Hierdurch können wesentlich größere Toleranzen ausgeglichen werden. Sollte die Längentoleranz zu groß werden, so muss mit einer reduzierten Brezelformgüte gerechnet werden, da die Formatelemente natürlich nur einen bestimmten Toleranzausgleich zulassen. Sollen beispielsweise zwei völlig unterschiedliche Brezelformen mit dem System produziert werden, so ist entweder bei der Formatstation die Formatelemente auszutauschen oder aber eine zweite Formatstation zu verwenden.

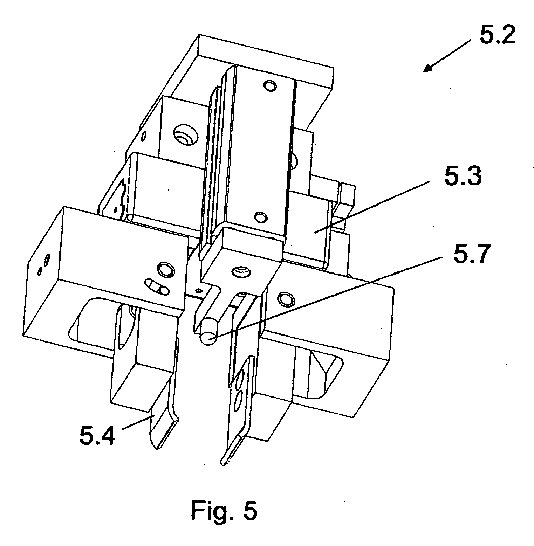

Die Hand 5.1 des Roboters 5 ist um vier Achsen verschwenkbar. Sie trägt eine Greifereinheit 5.2 (Fig. 4, 5). Die Greifereinheit 5.2 weist einen Parallelbackengreifer 5.3 mit zwei gegeneinander verfahrbaren und drehbaren Greiffingern 5.4 auf.

Die Greiferfinger 5.4 sind beweglich - verschwenkbar - um Schwenkachsen 5.5 gelagert, wobei eine Federspannung, womit die Greiffinger 5.4 in die in den Fig. 4 und 5 dargestellte Parallelstellung gedrückt wird durch um die Gelenkachsen 5.5 angeordnete Schraubenfedern 5.6 mit Andrückfingern 5.6.1 und 5.6.2 aufgebracht wird. Der Finger 5.6.1 liegt dabei an einem Widerlager am Parallelbackengreifer 5.3 an, während die Finger 5.6.2 gegen entsprechenden Greiffinger 5.4 drückt und diesen in die dargestellte Parallelstellung drängt. Andererseits können die Greiffinger 5.4 angreifen an einem Gegenstand - hier Teigstrangabschnitten - gegen die einwirkende Federkraft der Feder 5.6 ausweichen, so dass das empfindliche Handhabungsgut Teigbrezel nicht beschädigt wird. Die Federn 5.6 sind relativ weich ausgebildet.

Aufgabe der Schlingstation 4.5.1, 4.5.2 ist es, den Ωförmigen Teigling 3 zu der gewünschten Brezelform zu schlingen/umzuformen, so dass keine Notwendigkeit besteht, während des Schlingens ein Formelement einzusetzen. Die folgende Beschreibung bezieht sich auf eine Schlingstation, die aus einem Roboter mit einer Greifeinheit und einem Transportband besteht. Bei dieser Ausführungsform der Schlingstation kommt dem Roboter die Aufgabe zu, den kompletten Schlingvorgang durchzuführen.

Durch die beschriebene Ausgestaltung ist ein schnelles, produktschonendes und prozesssicheres Greifen von unterschiedlichen Teiglingen bzw. Teigenden gewährleistet. Die Greif- und Öffnungsbewegungen des Parallelbackengreifers können mit hoher (maximaler Geschwindigkeit) durchgeführt werden, während durch die beweglichen Greiferfinger 5.4 die maximal auf den Teigstrang wirkende Greifkraft durch die Federkonstante der Schraubenfeder 5.6 bestimmt ist und daher ein Quetschen bzw. starkes Verformen des Teigs - selbst bei unterschiedlichen Teigstrangdurchmessern - ausgeschlossen werden kann, so dass das Greifen produktschonend erfolgt.

Die Greiferfinger 5.4 weisen in Ruhestellung zueinander parallel ausgerichtete Hauptabschnitte 5.4.1 sowie aufeinander zugebogene Enden 5.4.2 auf. Durch Letztere wird verhindert, dass der Teigstrang aus den Greiferfingern herausgleiten kann.

Weiter ist an der Greifereinheit 5.2 ein Auswerfer 5.7 (lediglich in Fig. 5 dargestellt) vorgesehen. Der Greiferfinger 5.7 ist entlang der Greifereinheit 5.2 parallel zu den Hauptabschnitten 5.4.1 der Greiferfinger 5.4 zwischen diesen verfahrbar und dient zum Auswerfen des zunächst von den Greiferfingern 5.4 ergriffenen Teigendes nach Freigabe desselben durch die Greiferfinger. Hierdurch wird das Teigende zuverlässig aus den Greiferfingern 5.4 abgegeben. Darüber hinaus kann die Bewegung und Kraft des Auswerfers 5.7 derart ausgebildet sein, dass das Teigende mit einer vorgegebenen Kraft auf der Brezel aufgedrückt wird, so dass zum Einen ein hinreichendes Haften des Teigendes an dem unter ihm liegenden Brezelabschnitt bewirkt wird, andererseits zu starke Abdrücke auf der Brezel vermieden werden.

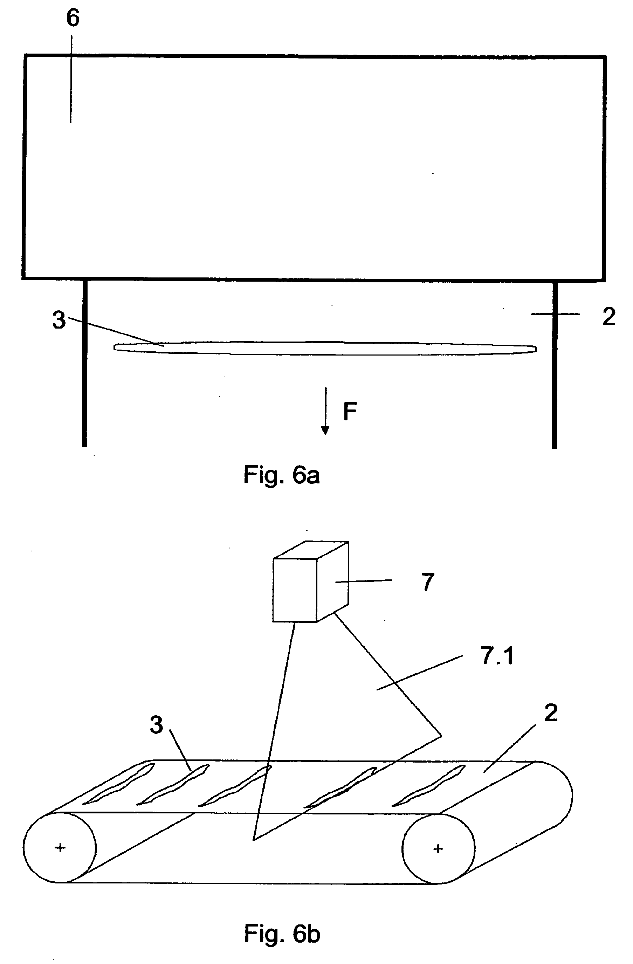

Der Einsatz der beschriebenen erfindungsgemäßen Vorrichtung zur Durchführung des erfindungsgemäßen Verfahrens wird im Folgenden anhand der Fig. 6a bis 6h erläutert:

Der Transport der Teiglinge von einer Ausrollmaschine über die Formstation 4 zur Schlingstation 5.0 kann mit einem einzigen intermittierenden Förderband erfolgen. Wegen der unterschiedlichen Prozesszeit sollten zur Entkopplung idealerweise separate Förderbänder 2.5 eingesetzt werden.

Der Formstation 4 wird, wie schon gesagt, mittels des Förderbandes 2 einen auf diesem quer zur Förderrichtung F aufliegender gerader und gestreckter Teigstrang 3 zugeführt. Diese Form erhält der Teigstrang 3 in einem an sich bekannten Stranglangroller 6, der der eigentlichen erfindungsgemäßen Vorrichtung 1 vorgeordnet ist.

Lage und genaue Abmessungen des Teigstranges 3 werden durch ein Messsystem 7 detektiert, das ein berührungsloses Messsystem, vorzugsweise ein Lasermesssystem ist und als solches mit einem Lichtvorhang in einer Scannerebene 7.1 arbeitet. Das Messsystem kann sowohl die Teigstranglänge als auch die genaue Position auf dem Förderband 2 bestimmen kann sowie darüber hinaus gegebenenfalls auch Breitenabmessungen des Strangs erfassen (Fig. 6b). Die Auswertung der Sensordaten erfolgt über eine externe Recheneinheit, die auch die Robotersteuerung sein kann.

Ein Einsatz des Messsystems 7, insbesondere in Form eines Laserscanners ist nur dann erforderlich, wenn größere Positions- und Längentoleranzen auftreten können oder aber eine hohe Güte erzielt werden soll. Idealerweise ist er dann mit der in Fig. 2b modifizierten Formstation im Einsatz zu bringen. Das Lasermesssystem sollte unmittelbar nach der Ausrollmaschine angebracht sein, so dass wegen der Berechnungszeit/Sensordatenauswertung eine ausreichende Zeit bis zum Eintreffen des Teiglings in der Formstation besteht.

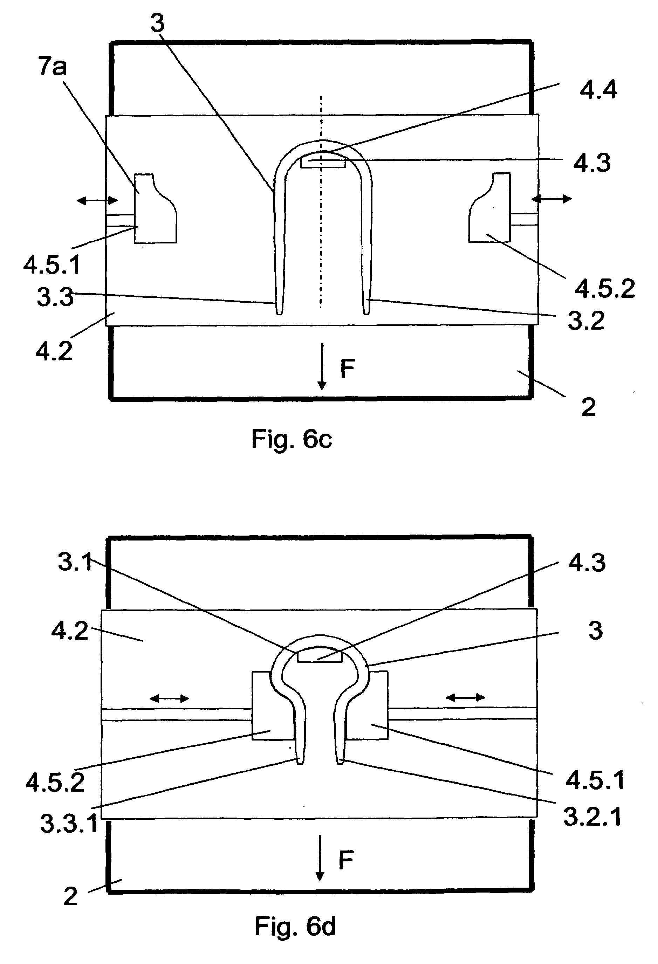

Während die Fig. 6a eine Sicht von oben und die Fig. 6b eine perspektivische Seitenansicht insbesondere des Förderbandes 2 und der auf diesem aufliegenden Teiglinge 3 zeigen beinhalten die Fig. 6c und 6b Draufsichten (wobei zur besseren Veranschaulichung die Formplatte transparent gezeichnet ist) auf die Formaufnahmeplatte 2 mit der den auf dieser befindlichen Formelementen sowie einem von diesem erfassten Teigstrang 3. Durch die Förderung des Förderbandes 2 wird zunächst der mittlere Abschnitt des Teigstranges 3 gegen die bogenförmige Wandung 4.4 des Formelementes 4.3 gefördert und durch dieses aufgehalten, während die seitlichen Bereiche des Stranges weitergefördert werden, wodurch die in der Fig. 6c dargestellte U-Form des Teigstranges 3 mit mittlerem U-Bogen 3.1 und seitlichen U-Schenkeln 3.2 und 3.3 gebildet wird.

Anschließend verfahren die seitlichen Formelemente 4.5.1, 4.5.2 mit ihren S-förmigen Formflächen 4.6 gegen die U-Schenkel 3.2 und drücken diese an den U-Bogen 3.1 abgewandten Enden 3.4 gegeneinander, so dass allgemein eine Ω-Form mit weiteren U-Bogen 3.1 bzw. Kopf des U-förmigen Stranges 3 und näher zueinander liegenden Enden 3.2.1, 3.3.1 geformt wird, wie dies in der Fig. 6d dargestellt ist. Hierbei liegen die Teigstrangendbereiche parallel zur Symmetrieachse. Nach Erreichen der U-Form des Teiglings kann das Förderband 2 zu dem vorstehend beschriebenen Verformungsvorgang angehalten werden; es arbeitet aber also intermittierend.

Der Teigling 3 liegt nach der Verformung direkt an allen drei Formelementen 4.3, 4.5.1, 4.5.2 an. Durch Kenntnis der Länge und Position des gradlinigen Teiglings aufgrund der durchgeführten Messung ist damit auch die Position der beiden Teigenden genau definiert.

Zur weiteren Förderung des Teigstranges 3 zu der den Roboter 5 aufweisenden Schlingstation 5.0 wobei die äußeren Formelemente 4.5.1, 4.5.2 nach außen verfahren und die Formaufnahmeplatte 4.2 wird nach oben geschwenkt, so dass die Formelemente 4.3, 4.4 aus dem Förderweg des Teiglings 3 herausgehoben werden und dieser nach der geschilderten Formbildung ungehindert zur Schlingstation 5.0 weitergefördert werden kann. Hierzu wird der vorgeformte Teigling 3, 4.5.1, 4.5.2 (Q-Form) vom Förderband 2 auf das Förderband 6, das Bestandteil der Schlingstation 5.0 ist, weiter übergeben.

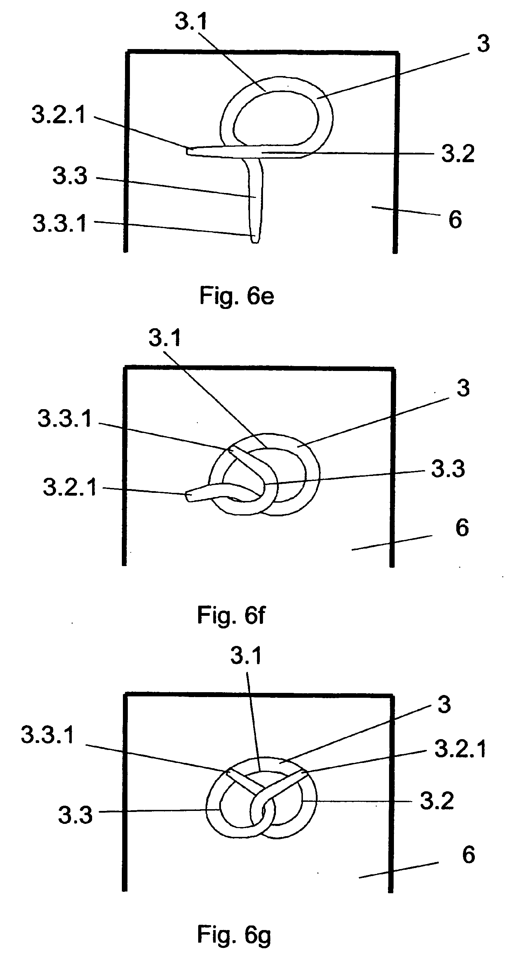

In der Schlingstation 5.0 wird zunächst das Ende 3.2.1 des U-Schenkels 3.2 des Teigstranges 3 durch den Parallelbackengreifer 5.3 am Roboter 5 aufgenommen, um 90° verschwenkt und sich quer über den zweiten U-Schenkel 3.3 erstreckend auf diesen abgelegt (Fig. 6e).

In einem weiteren Schritt wird das Ende 3.3.1 des zweiten Schenkels 3.3 aufgenommen und um etwa 270° verschwenkt und im Übergangsbereich zwischen dem U-Bogen 3.1 zum ursprünglichen zweiten U-Schenkel 3.3 auf dem Strang 3 aufgelegt (Fig. 6f).

Anschließend wird wiederum das Ende 3.2.1 des ersten U-Schenkels 3.2 aufgenommen, über den zweiten U-Schenkelabschnitt 3.3 um etwa 135° verschwenkt und im Übergangsbereich zwischen U-Bogen 3.1 zum ersten U-Schenkel 3.2 Symmetrie- oder Mittellinie des ursprünglichen U's abgelegt (Fig. 6g). Hierdurch ist die Brezel in wenigen, nämlich drei zuverlässigen Schritten sicher und wohlgeformt.

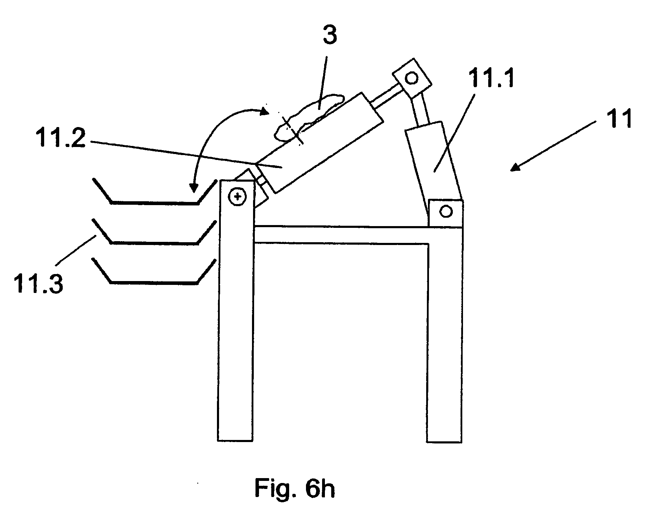

Im Weiteren wird die geformte Brezel zu einer in der Fig. 6h im Vertikalschnitt bzw. Seitenansicht dargestellten Übergabevorrichtung 11 gefördert. Diese weist, getragen von einer Schwenkvorrichtung 11.1 ein taktfähiges Transportband 11.2 auf. Auf diesem Taktband wird eine feste Anzahl an Brezeln mit einem festen Abstand zueinander in einer Reihe aufgestaut. Sobald das Taktband 11.2 die gewünschte Anzahl von Brezeln aufweist, die der Kapazität eines nachfolgenden Gärgehänges 11.3 entspricht, wird das Taktband 11.2 samt Brezeln um 180° um eine Achse parallel zur Vorderrichtung des Taktbandes 11.2 verschwenkt und die Brezeln werden in ihrer ursprünglichen Unterseite nah oben weisend und seitenverkehrt auf das Gärgehänge 11.3 übergeben.

Soll eine höhere Leistung der erfindungsgemäßen Vorrichtung und des erfindungsgemäßen Verfahrens gegenüber den beschriebenen, einen Roboter 5 in der Schlingstation 5.0 aufweisenden Vorrichtung erzielt werden, so lässt sich dies mit der Ausgestaltung der Fig. 7 der erfindungsgemäßen Vorrichtung erzielen. Hier weist die Schlingstation 5.0 für jeden der drei oben beschriebenen Schlingvorhänge einen separaten Roboter 5.0.1, 5.0.2, 5.0.3 - wiederum SCARA-Roboter - auf, wobei der erste Roboter 5.0.1 den unter Bezug auf die Fig. 6e beschriebenen Legevorgang, der Roboter 5.0.2 den unter Bezug auf die Fig. 6f beschriebenen Legevorgang und schließlich der Roboter 5.0.3 den letzten unter Bezugnahme auf die Fig. 6g beschriebenen Legevorgang durchführt, da im Gegensatz zuerst oben beschriebenen Ausgestaltung, bei der der einzige Roboter drei Legevorgänge durchführt, jeder der drei Roboter bei der Ausgestaltung der Fig. 7 lediglich ein Legevorgang durchführt, kann der Durchsatz bei dieser Ausgestaltung der erfindungsgemäßen Vorrichtung nahezu verdreifacht werden.

### Bezugszeichenliste

- 1: Vorrichtung
- 2: Förderband
- 3: Teigling
- 3.1: mittlerer U-Bogen
- 3.2, 3.3: U-Schenkel
- 3.2.1, 3.3.1: Ende des Teiglings
- 4: Formstation
- 4.1: Säulen
- 4.2: Formaufnahmeplatte
- 4.3: Formelement
- 4.4: bogenförmige Wandung
- 4.5.1, 4.5.2: seitliche Formelemente
- 4.6: heftförmige Wandungen
- 4.7, 4.8: Motoren
- 5: Roboter
- 5.0: Schlingstation
- 5.1: Hand
- 5.2: Greifereinheit
- 5.3: Parallelbackengreifer
- 5.4: Greiferfinger
- 5.5: Schwenkachsen
- 5.6.1, 5.6.2: Andrückfinger
- 5.7: Greiferfinger
- 6: Förderband
- 7: Messsystem
- 7.1: Scannerebene
- 11: Übergabevorrichtung
- 11.1: Schwenkvorrichtung
- 11.2: Transportband
- 11.3: Gärgehänge
- F: Förderrichtung

## Patentansprüche

1. Verfahren zum Legen eines Brezels mit den folgenden Schritten:
- ein geradliniger Teigstrang (3) wird zu einer U-Form mit einem ersten und einem zweiten U-Schenkel (3.2, 3.3) und mit einem diese verbindenden U-Bogen (3.1) verformt,
- sodann wird der U-förmig verformte Teigstrang (3) weiter zu einer Ω-Form geformt,
- anschließend wird ein erster Schenkel (3.2) des Teigstranges (3) aufgenommen und kreuzend über den zweiten Schenkel (3.3) des Teigstranges (3) abgelegt,
- im Folgenden wird der zweite Schenkel (3.3) aufgenommen, gegen den Übergangsbereich von U-Bogen (3.1) zu erstem Schenkel (3.2) und über diesen hinaus über insgesamt mehr als 180° verschwenkt und mit seinem Endbereich zu seinem Übergangsbereich vom U-Bogen (3.1) hin versetzt zur Mitte des U-Bogens (3.1) auf diesem abgelegt,
- anschließend wird das Ende (3.2.1) des ersten ursprünglichen U-Schenkels (3.2) wieder aufgenommen und über den ursprünglichen zweiten U-Schenkel (3.3) geführt und zur gegenüber dem zweiten U-Schenkel (3.3) zur anderen Seite hin versetzt auf dem U-Bogen (3.1) abgelegt.

2. Verfahren nach Anspruch 1, **dadurch gekennzeichnet, dass** Länge und/oder Position des zugeführten Teigstranges bestimmt werden.

3. Verfahren nach einem der Ansprüche 1 oder 2, **dadurch gekennzeichnet, dass** der Teigstrang (3) zum Verformen zunächst um ein den U-Bogen (3.1) des in U-Form gelegten Teigstranges (3) bildendes bogenförmiges Formelement (4.3) herumgelegt wird.

4. Verfahren nach Anspruch 1 bis 3, **dadurch gekennzeichnet, dass** der Teigstrang (3) mittels eines Förderers (2) in Querausrichtung zur Förderrichtung gegen ein Bogenelement (4.3, 4.4) bewegt und durch dieses in der Mitte des Teigstranges (3) gehemmt wird, während die Enden des Teigstranges (3.2.1, 3.3.1) weitergeführt werden.

5. Verfahren nach einem der Ansprüche 1 bis 4, **dadurch gekennzeichnet, dass** nach Bilden eines U's für den Teigstrang (3) die U-Schenkel (3.2, 3.3) durch Formelemente (4.5.1, 4.5.2) mit S-förmigen Formwandungen zu einer Ω-Form des Teigstranges (3) verformt werden, indem die freien Enden (3.2.1, 3.3.1) des Teigstranges (3) gegenüber den am Übergangsbereichs des U-Schenkels (3.2, 3.3) anschließenden Bereichen der U-Schenkel (3.2, 3.3) näher gegeneinander bewegt werden.

6. Verfahren nach einem der vorangehenden Ansprüche, **dadurch gekennzeichnet, dass** die Brezel an ein Gärgehänge (11.3) durch Verschwenken eines Transportbandes (11.2) um 180° senkrecht zu seiner Transportrichtung übergeben werden.

7. Vorrichtung zum Legen von Brezeln
- mit einem bogenförmigen Formelement (4.3) zum Verformen eines geradlinigen Teigstranges (3) zu einer U-Form mit einem ersten und einem zweiten U-Schenkel (3.2, 3.3) und mit einem diese verbindenden U-Bogen (3.1),
- mit gegen die U-Schenkel des in U-Form gelegten Teigstranges (4) von außen verfahrbare Formelemente (4.5.1) mit S-förmigen Anlagewandungen, durch die die Enden (3.2.1, 3.3.1) der U-Schenkel (3.2, 3.3) gegenüber Bereichen der U-Schenkel (3.2, 3.3) im Übergangsbereich zum U-Bogen (3.1) des Teigstranges (3) näher gegeneinander bewegt werden, und
- mit mindestens einem Industrieroboter (5) mit einem zum Aufnehmen eines Endes (3.2.1) eines Teigstranges (3) ausgebildeten Greifer (5.2), wobei der Industrieroboter (5) zur Durchführung der folgenden Schritte in der angegebenen Reihenfolge ausgebildet ist:
-- Aufnehmen eines ersten Schenkels (3.2) des Teigstranges (3), kreuzendes Ablegen über den zweiten Schenkel (3.3) des Teigstranges (3),
-- Aufnehmen und Verschwenken des zweiten Schenkels (3.3), gegen den Übergangsbereich von U-Bogen (3.1) zu erstem Schenkel (3.2) und über diesen hinaus über insgesamt mehr als 180° und Ablegen des zweiten Schenkels (3.3) mit seinem Endbereich zu seinem Übergangsbereich vom U-Bogen (3.1) hin versetzt zur Mitte des U-Bogens (3.1) auf den U-Bogen (3.1),
-- Erneutes Aufnehmen des Endes des ersten ursprünglichen U-Schenkels (3.2), Führen über den ursprünglichen zweiten U-Schenkel (3.3) und Ablegen auf dem U-Bogen (3.1) gegenüber dem zweiten U-Schenkel (3.3) zur anderen Seite hin versetzt.

8. Vorrichtung nach Anspruch 7, **dadurch gekennzeichnet, dass** der Industrieroboter (5) ein Roboter mit mindestens vier Achsen ist.

9. Vorrichtung nach Anspruch 7 oder 8, **dadurch gekennzeichnet, dass** der Industrieroboter (5) Horizontal- oder SCARA-Kinematiken aufweist.

10. Vorrichtung nach einem der Ansprüche 7 bis 9, **gekennzeichnet durch** ein Lasermesssystem (7) zur Bestimmung von Position und/oder Länge des zugeführten Teigstranges (3).

11. Vorrichtung nach einem der Ansprüche 7 bis 10, **gekennzeichnet durch** ein quer zu seiner Förderrichtung auf ihm aufliegenden Teigstrang (3) förderndes Förderband (2) und ein auf dieses absenkbares Formelement (4.3) mit einer in den zugeförderten Teigstrang (also entgegen der Förderrichtung) konvex ausgebildete bogenförmige Wandung (4.4).

12. Vorrichtung nach einem der Ansprüche 7 bis 11, **gekennzeichnet durch** gegen die U-Schenkel des in U-Form gelegten Teigstranges (3) von außen verfahrbare Formelemente (4.5.1) mit S-förmigen Anlagewandungen, **durch** die die Enden der U-Schenkel gegenüber Bereichen der U-Schenkel im Übergangsbereich zum U-Bogen des Teigstranges näher gegeneinander bewegt werden.

13. Vorrichtung nach einem der Ansprüche 7 bis 12, **gekennzeichnet durch** eine Lichtschranke im Bereich des Formelements (4.3) mit bogenförmiger Wandung (4.4).

14. Vorrichtung nach einem der Ansprüche 7 bis 13, **gekennzeichnet durch** ein Taktband (11.2) zur Annäherung der nacheinander gefertigten Brezeln, das sich an eine einen Roboter (5) mit Teiggreifer (5.4) aufweisende Schlingstation (5.0) anschließt, wobei insbesondere ein Gärgehänge (11.3) zur Aufnahme der vom Taktband (11.2) an dieses übergebenen Brezel vorgesehen ist, wobei insbesondere das Taktband (11.2) mit einer Schwenkrichtung senkrecht zu seiner Förderrichtung um 180° über das Gärgehänge (11.3) zur Übergabe der Brezeln an dieses verschwenkbar ist.

## Claims

1. Method for shaping a pretzel, having the following steps:
- a rectilinear strand of dough (3) is shaped into a U shape having a first and a second limb of the U (3.2, 3.3) and having a U-shaped arc (3.1) connecting the latter,
- the strand of dough (3) shaped into a U shape is then shaped further to give a Ω shape,
- then a first limb (3.2) of the strand of dough (3) is taken up and laid such that it crosses over the second limb (3.3) of the strand of dough (3),
- next, the second limb (3.3) is taken up, pivoted towards the region of transition from the U-shaped arc (3.1) to the first limb (3.2) and beyond this, through a total of more than 180°, and laid with its end region towards its region of transition from the U-shaped arc (3.1), offset from the centre of the U-shaped arc (3.1) and on the latter,
- then the end (3.2.1) of the first, original limb of the U (3.2) is taken up again and guided over the original second limb of the U (3.3) and laid opposite the second limb of the U (3.3), offset towards the other side, on the U-shaped arc (3.1).

2. Method according to Claim 1, **characterized in that** the length and/or position of the strand of dough which is supplied are determined.

3. Method according to either of Claims 1 and 2, **characterized in that**, for shaping, the strand of dough (3) is first laid around an arcuate shaping element (4.3) which forms the U-shaped arc (3.1) of the strand of dough (3) which is laid in a U shape.

4. Method according to Claims 1 to 3, **characterized in that** the strand of dough (3) is moved towards an arc element (4.3, 4.4) by means of a conveyor (2) in a transverse alignment in relation to the direction of conveying and is restrained by this arc element (4.3, 4.4) in the centre of the strand of dough (3), while the ends of the strand of dough (3.2.1, 3.3.1) are moved further.

5. Method according to one of Claims 1 to 4, **characterized in that** once a U has been formed for the strand of dough (3) the limbs of the U (3.2, 3.3) are shaped by shaping elements (4.5.1, 4.5.2) having S-shaped shaping walls, to give the strand of dough (3) a Ω shape **in that** the free ends (3.2.1, 3.3.1) of the strand of dough (3) are moved closer to one another by comparison with the regions of the limbs of the U (3.2, 3.3) adjoining the region of transition to the limb of the U (3.2, 3.3).

6. Method according to one of the preceding claims, **characterized in that** the pretzels are transferred to a proving suspension unit (11.3) by pivoting a conveyor belt (11.2) through 180° perpendicular to its direction of transport.

7. Device for shaping pretzels,
- having an arcuate shaping element (4.3) for shaping a rectilinear strand of dough (3) into a U shape having a first and a second limb of the U (3.2, 3.3) and having a U-shaped arc (3.1) connecting the latter,
- having shaping elements (4.5.1), which may be moved from the outside towards the limbs of the U of the strand of dough (3) shaped into a U, and which have S-shaped abutment walls by means of which the ends (3.2.1, 3.3.1) of the limbs of the U (3.2, 3.3) are moved closer to one another by comparison with regions of the limbs of the U (3.2, 3.3) in the region of transition to the U-shaped arc (3.1) of the strand of dough (3), and
- having at least one industrial robot (5) having a gripper (5.2), constructed to take up an end (3.2.1) of a strand of dough (3), wherein the industrial robot (5) is constructed to perform the following steps in the order stated:
- - taking up a first limb (3.2) of the strand of dough (3) and laying it such that it crosses over the second limb (3.3) of the strand of dough (3),
- - taking up and pivoting the second limb (3.3) towards the region of transition from the U-shaped arc (3.1) to the first limb (3.2) and beyond this, through a total of more than 180°, and laying the second limb (3.3) with its end region towards its region of transition from the U-shaped arc (3.1), offset from the centre of the U-shaped arc (3.1) and on the U-shaped arc (3.1),
- - taking up again the end of the first, original limb of the U (3.2), guiding it over the original second limb of the U (3.3) and laying it opposite the second limb of the U (3.3), offset towards the other side, on the U-shaped arc (3.1).

8. Device according to Claim 7, **characterized in that** the industrial robot (5) is a robot having at least four axes.

9. Device according to Claim 7 or 8, **characterized in that** the industrial robot (5) has horizontal or SCARA kinematics.

10. Device according to one of Claims 7 to 9, **characterized by** a laser measurement system (7) for determining the position and/or length of the strand of dough (3) supplied.

11. Device according to one of Claims 7 to 10, **characterized by** a conveyor belt (2) which conveys a strand of dough (3) lying thereon transversely in relation to its direction of conveying, and a shaping element (4.3) which may be lowered onto this conveyor belt (2) and has an arcuate wall (4.4) which is constructed to be convex towards the strand of dough supplied (that is to say in opposition to the direction of conveying).

12. Device according to one of Claims 7 to 11, **characterized by** shaping elements (4.5.1) which may be moved from the outside towards the limbs of the U of the strand of dough (3) shaped into a U and which have S-shaped abutment walls by means of which the ends of the limbs of the U are moved closer to one another by comparison with regions of the limbs of the U in the region of transition to the U-shaped arc of the strand of dough.

13. Device according to one of Claims 7 to 12, **characterized by** a light barrier in the region of the shaping element (4.3) having an arcuate wall (4.4).

14. Device according to one of Claims 7 to 13, **characterized by** an indexing belt (11.2) for bringing the successively made pretzels closer, which adjoins a sling belt station (5.0) which has a robot (5) having a dough gripper (5.4), wherein in particular a proving suspension unit (11.3) for taking up pretzels transferred thereto from the indexing belt (11.2) is provided, wherein in particular the indexing belt (11.2) may be pivoted through 180°, in a direction of pivoting which is perpendicular to its direction of conveying, over the proving suspension unit (11.3), for transferring the pretzels to the latter.

## Revendications

1. Procédé pour former un bretzel avec les étapes suivantes :
- une bande de pâte (3) rectiligne est déformée pour lui donner une forme en U avec une première et une deuxième branche de U (3.2, 3.3) et avec un arc du U (3.1) reliant ces branches ;
- la bande de pâte (3) déformée en forme de U est ensuite davantage déformée pour prendre une forme d'Ω ;
- une première branche (3.2) de la bande de pâte (3) est ensuite prise et déposée en croix au-dessus de la deuxième branche (3.3) de la bande de pâte (3) ;
- la deuxième branche (3.3) est prise par la suite, contre la zone de transition de l'arc du U (3.1) conduisant à la première branche (3.2) et pivotée par-dessus celui-ci vers l'extérieur sur au total plus de 180° et posée sur lui avec sa zone d'extrémité conduisant à sa zone de transition en direction du centre de l'arc du U (3.1), de façon décalée par rapport à l'arc du U (3.1) ;
- l'extrémité (3.2.1) de la première branche de U (3.2) d'origine est ensuite de nouveau prise et guidée au-dessus de la deuxième branche de U (3.3) d'origine et déposée sur l'arc du U (3.1), de façon décalée par rapport à la deuxième branche de U (3.3) en direction de l'autre côté.

2. Procédé selon la revendication 1, **caractérisé en ce que** la longueur et/ou la position de la bande de pâte amenée sont définies.

3. Procédé selon l'une quelconque des revendications 1 ou 2, **caractérisé en ce que** la bande de pâte (3) est d'abord posée, pour être déformée, autour de l'élément-forme (4.3) en forme d'arc formant l'arc du U (3.1) de la bande de pâte (3) posée en forme de U.

4. Procédé selon l'une quelconque des revendications 1 à 3, **caractérisé en ce que** la bande de pâte (3) est déplacée à l'aide d'un système de transport (2) placé en alignement transversal par rapport à la direction de transport contre un élément arqué (4.3, 4.4) et bloqué contre celui-ci au milieu de la bande de pâte (3) tandis que les extrémités de la bande de pâte (3.2.1, 3.3.1) sont emmenées plus loin.

5. Procédé selon l'une quelconque des revendications 1 à 4, **caractérisé en ce qu'**après formation d'un U pour la bande de pâte (3), les branches de U (3.2, 3.3) sont déformées par les éléments-formes (4.5.1, 4.5.2) dotés de parois de forme en forme de S pour prendre une forme d'Ω de la bande de pâte (3), les extrémités libres (3.2.1, 3.3.1) de la bande de pâte (3) étant déplacées de façon à être davantage rapprochées l'une contre l'autre que les zones des branches de U (3.2, 3.3) connexes à la zone de transition de la branche de U (3.2, 3.3).

6. Procédé selon l'une quelconque des revendications précédentes, **caractérisé en ce que** les bretzels sont transférés à un palonnier de fermentation (11.3) par pivotement d'un tapis de transport (11.2) de 180° perpendiculairement à sa direction de transport.

7. Dispositif pour former des bretzels :
- avec un élément-forme (4.3) en forme d'arc servant à déformer une bande de pâte (3) rectiligne pour réaliser une forme en U avec une première et une deuxième branche de U (3.2, 3.3) et avec un arc du U reliant ces branches (3.1) ;
- avec des éléments-formes (4.5.1) pouvant être déplacés de l'extérieur contre les branches de U de la bande de pâte (4) posée dans la forme en U avec des parois de soutien en forme de S à travers lesquelles les extrémités (3.2.1, 3.3.1) des branches de U (3.2, 3.3) sont déplacées plus près l'une contre l'autre par rapport aux zones des branches de U (3.2, 3.3) situées dans la zone de transition conduisant à l'arc du U (3.1) de la bande de pâte (3) ; et
- avec au moins un robot industriel (5) équipé d'un élément de préhension (5.2) servant à prendre une extrémité (3.2.1) d'une bande de pâte (3), le robot industriel (5) étant réalisé pour mettre en oeuvre les étapes suivantes dans la séquence mentionnée :
-- préhension d'une première branche (3.2) de la bande de pâte (3), pose en croix au-dessus de la deuxième branche (3.3) de la bande de pâte (3) ;
-- préhension et pivotement de la deuxième branche (3.3), contre la zone de transition de l'arc du U (3.1) conduisant à la première branche (3.2) et par-dessus celui-ci vers l'extérieur sur au total plus de 180° et pose de la deuxième branche (3.3) avec sa zone d'extrémité conduisant à sa zone de transition en direction du centre de l'arc du U (3.1) sur l'arc du U (3.1), de façon décalée par rapport à l'arc du U (3.1) ;
- nouvelle préhension de l'extrémité (3.2.1) de la première branche de U (3.2) d'origine, guidage au-dessus de la deuxième branche de U (3.3) d'origine et pose sur l'arc du U (3.1), de façon décalée par rapport à la deuxième branche de U (3.3) en direction de l'autre côté.

8. Dispositif selon la revendication 7, **caractérisé en ce que** le robot industriel (5) est un robot doté d'au moins quatre axes.

9. Dispositif selon la revendication 7 ou 8, **caractérisé en ce que** le robot industriel (5) comporte des cinématiques horizontales ou SCARA.

10. Dispositif selon l'une quelconque des revendications 7 à 9, **caractérisé par** la présence d'un système de mesure par laser (7) servant à déterminer la position et/ou la longueur de la bande de pâte (3) amenée.

11. Dispositif selon l'une quelconque des revendications 7 à 10, **caractérisé par** la présence d'un tapis de transport (2) transportant une bande de pâte (3) reposant sur lui transversalement par rapport à sa direction de transport et d'un élément-forme (4.3) pouvant descendre sur lui avec une paroi (4.4) en forme d'arc réalisée de façon convexe dans la bande de pâte transportée (donc dans la direction contraire à la direction de transport).

12. Dispositif selon l'une quelconque des revendications 7 à 11, **caractérisé par** la présence d'éléments-formes (4.5.1) pouvant être déplacés depuis l'extérieur contre les branches de U de la bande de pâte (3) posée en forme en U avec des parois de soutien en forme de S à travers lesquelles les extrémités des branches de U sont déplacées de façon à être davantage rapprochées l'une contre l'autre que les zones des branches de U situées dans la zone de transition de l'arc du U de la bande de pâte.

13. Dispositif selon l'une quelconque des revendications 7 à 12, **caractérisé par** la présence d'une barrière lumineuse placée dans la zone de l'élément-forme (4.3) avec une paroi (4.4) en forme d'arc.

14. Dispositif selon l'une quelconque des revendications 7 à 13, **caractérisé par** la présence d'un tapis à cadence (11.2) permettant d'approcher les bretzels fabriqués les uns après les autres, ledit tapis s'approchant d'une station d'accrochage (5.0) comportant un robot (5) équipé d'un élément de préhension de pâte (5.4), un palonnier de fermentation (11.3) étant notamment prévu pour prendre les bretzels lui étant transmis depuis le tapis à cadence (11.2), le tapis à cadence (11.2) pouvant notamment être pivoté selon une direction de pivotement perpendiculaire à sa direction de transport de 180° au-dessus du palonnier de fermentation (11.3) afin de lui transmettre les bretzels.
